Europäisches Patentamt

European Patent Office

Office européen des brevets

(19)

(11) Veröffentlichungsnummer: **0 278 419 B1**

# (12) EUROPÄISCHE PATENTSCHRIFT

(45) Veröffentlichungstag der Patentschrift: **22.04.92**

(51) Int. Cl.⁵: **E02D 31/00**, E02B 3/12

(21) Anmeldenummer: **88101679.4**

(22) Anmeldetag: **05.02.88**

(54) **Wasserundurchlässige Dichtungsmatte, bestehend im wesentlichen aus einer Trägerschicht, einer Zwischenschicht aus quellfähigem Ton und einer Deckschicht.**

(30) Priorität: **13.02.87 DE 3704503**

(43) Veröffentlichungstag der Anmeldung:
**17.08.88 Patentblatt 88/33**

(45) Bekanntmachung des Hinweises auf die
Patenterteilung:
**22.04.92 Patentblatt 92/17**

(84) Benannte Vertragsstaaten:
**AT BE CH DE ES FR GB GR IT LI LU NL SE**

(56) Entgegenhaltungen:
**DE-A- 3 435 983
FR-A- 2 195 237
US-A- 4 048 373
US-A- 4 344 722
US-A- 4 565 468**

(73) Patentinhaber: **NAUE-FASERTECHNIK GMBH & CO. KG
Gewerbestrasse 2
W-4992 Espelkamp-Fiestel(DE)**

(72) Erfinder: **Heerten, Georg, Dr.
Kaiserstrasse 15
W-4990 Lübbecke 1(DE)**
Erfinder: **Johannssen, Karsten
Wehe 212
W-4993 Rahden(DE)**
Erfinder: **Müller, Volkhard
Destel 146
W-4995 Stemwede 1(DE)**

(74) Vertreter: **Steffens, Joachim, Dr.
Steubstrasse 10
W-8032 München-Gräfelfing(DE)**

**Beschreibung**

Die vorliegende Erfindung betrifft eine vorzugsweise für den Wasser- und Deponiebau geeignete wasserundurchlässige Dichtungsmatte, die im wesentlichen aus einer Trägerschicht, einer Zwischenschicht aus quellfähigem Ton und einer Deckschicht besteht, sowie ein Verfahren zu ihrer Herstellung.

Derartige Dichtungsmatten sind aus der europäischen Patentschrift 0 059 625 bekannt, bei der eine flexible Trägerschicht eine Bentonit-Zwischenschicht trägt, auf der sich wiederum eine Deckschicht befinden kann. Alle drei Schichten, d.h. die Trägerschicht, die ein Vliesstoff sein kann, die Bentonit-Zwischenschicht und die Abdeckschicht, die eine nicht näher definierbare Matte sein kann, sind mittels eines Klebstoffes miteinander verbunden. Ein solches Produkt ist nicht nur in seiner Herstellung durch die Verwendung eines Klebstoffes nachteilig, sondern insbesondere dadurch, weil sowohl die Trägerschicht als auch die Deckschicht nur über die Bentonit-Zwischenschicht miteinander verbunden sind. Darüber hinaus wird bemerkt, daß aufgrund der Verklebung keine feste Verbindung zwischen Trägerschicht und Deckschicht vorhanden ist. Dies macht sich insbesondere beim bestimmungsgemäßen Einsatz nachteilig bemerkbar, da die Bentonitschicht im Kontakt mit Wasser ungehindert in alle Richtungen in starkem Maße quillt und dabei eine Bentonitschicht gebildet wird, die wie ein Gleitfilm zwischen Träger- und Deckschicht wirkt. Dies ist insbesondere nachteilig beim Verlegen derartiger Dichtungsbahnen an Böschungen.

Genau den gleichen Effekt erzielt man mit einer Dichtungsmatte gemäß der US-PS 4 565 468, die aus einer Vliesstoff-Trägerschicht, einer Bentonitzwischenschicht und einer Deckschicht besteht, wobei die Deckschicht mit der Trägerschicht vernäht ist. Außerdem soll und muß die Deckschicht aus einem solchen Material bestehen, das in Kontakt mit Wasser zerfällt, so daß der Bentonit ebenfalls ungehindert in alle Richtungen aufquellen und eine zusammenhängende Bentonitdichtungsschicht bilden kann.

Im Prinzip dienen also die in den vorstehenden Patentschriften beschriebenen Dichtungsmatten nur dazu, den Bentonit in flächiger Form zu verpacken und zwar in einer solchen Form, daß sich die Deckschicht beim Aufquellen des Bentonits von der Trägerschicht löst und eine zusammenhängende Bentonitschicht entsteht.

Eine solche Dichtungsmatte kann man aber in der Praxis an Ort und Stelle einfacher und billiger auf die Art und Weise herstellen, wie es in der US-Patentschrift 4,344,722 beschrieben ist. Gemäß den Ausführungen in dieser Patentschrift verlegt man auf dem abzudichtenden Erdreich zunächst eine Vliesstoffschicht, bringt auf diese Vliesstoffschicht eine Schicht auf pulvrigem Bentonit auf und deckt dann diese Bentonitschicht mit einer weiteren Vliesstoffschicht ab. Diese drei Schichten liegen lediglich übereinander und sind weder miteinander verklebt, noch vernäht, noch anderweitig miteinander verbunden, so daß dieser Aufbau nach dem Aufquellen des Bentonits die gleichen Nachteile aufweist wie sie vorstehend hinsichtlich der beiden anderen Patentschriften geschildert wurden.

Aufgabe der vorliegenden Erfindung ist es daher, eine wasserundurchlässige Dichtungsmatte der eingangs genannten Art herzustellen, bei der Trägerschicht und Deckschicht auch beim und nach dem Aufquellen des quellfähigen Tons fest verbunden bleiben, um einen Quellgegendruck aufzubauen, der eine dichtere Packung der gequollenen Tonteilchen gewährleistet, und bei der die Schubkraftübertragung von Deckschicht zu Trägerschicht nicht durch die sehr niedrigen Reibungswerte des gequollenen Tons beschränkt ist.

Gelöst wird diese Aufgabe gemäß der vorliegenden Erfindung dadurch, daß (a) die Träger- und/oder die Deckschicht aus einem Vliesstoff und die gegebenenfalls nicht aus einem Vliesstoff bestehende Schicht aus einem Gewebe oder Gewirke besteht und (b) alle drei Schichten miteinander vernadelt sind.

Vorzugsweise besteht sowohl die Trägerschicht als auch die Deckschicht aus einem Vliesstoff. Es kann aber auch ein solcher Aufbau gewünscht sein, bei dem die Trägerschicht aus einem Vliesstoff und die Deckschicht aus einem Gewebe oder Gewirke oder die Deckschicht aus einem Vliesstoff und die Trägerschicht aus einem Gewebe oder Gewirke besteht.

Bei dem erfindungsgemäß beanspruchten, vorzugsweise kontinuierlich arbeitenden Verfahren geht man so vor, daß man auf die Trägerschicht zunächst die Zwischenschicht aus trockenem, quellfähigen Ton und dann darauf die Deckschicht aufbringt und anschließend alle drei Schichten in einem Nadelstuhl vernadelt.

Die erfindungsgemäß verwendeten Vliesstoffe bestehen vorzugsweise aus Qualitäts-Kunststoff-Fasern, insbesondere aus Polyethylen-, Polypropylen-, Polyester-, Polyacryl- und/oder Polyamidfasern. Besonders bevorzugt im Einsatzgebiet der Deponietechnik sind Vliesstoffe aus Polyethylen hoher Dichte (HDPE).

Derartige Vliesstoffe sind absolut verrottungsfest (resistent gegen alle im Gewässer und im Boden vorkommenden Substanzen) und gewährleisten somit nachweislich eine extrem hohe Lebensdauer. Ihre überaus hohe Reißfestigkeit bewirkt eine weitgehende Unempfindlichkeit gegen mechanische Beanspruchungen. Sie sind hochgradig UV-stabil und haben ein hohes spezifisches Gewicht (großer Vorteil beim Unterwassereinbau).

2

Im Aufbau handelt es sich bei den erfindungsgemäß eingesetzten Vliesstoffen vorzugsweise um mechanisch verfestigte Spinnfaservliese. Sie sind so aufgebaut, daß die gekräuselt zusammengefügten Fasern ein Flächengebilde mit unzähligen labyrinthartigen Gängen bilden. Hierbei wird die Bodenstruktur ideal nachgebildet. Das Gefüge der Vliesstoffe läßt sich je nach der Bodenbeschaffenheit gröber oder feiner einstellen, so daß eine optimale Anpassung an die anstehende Bodenart gewährleistet ist. Die mechanische Verfestigung garantiert einen hohen Reibungswert zwischen dem anstehenden Boden und dem Vliesstoff sowie der Abdeckung. Anstelle der durch Vernadelung mechanisch verfestigten Vliesstoffe kann man auch solche Vliesstoffe einsetzen, die mittels der Nähwirktechnik oder durch Verwirbelung mechanisch verfestigt wurden oder chemisch verfestigt wurden.

Zu erfindungsgemäß eingesetzten Vliesstoffen gehören beispielsweise solche, wie sie aus den nachfolgenden Tabellen 1 und 2 ersichtlich sind.

Tabelle 1

| Type | D 455 R | D 615 R | D 815 R |
|---|---|---|---|
| Faserrohstoff | 100% HDPE | 100% HDPE | 100% HDPE |
| Fläckengewicht (g/m$^2$) | 450 | 600 | 800 |
| Dicke (mm) bei 2 kN/m$^2$ | 4,3 | 4,4 | 4,7 |
| Höchstzugkraft DIN 53857 (Streifenzugversuch) (Länge/Breite) (daN/10 cm) | 54/66 | 80/102 | 84/120 |
| Höchstzugkraftdehnung DIN 53857 (Länge/Breite) (%) | 230/193 | 247/198 | 300/200 |
| Verformung bei Stempeldurchdrückkraft DIN 54307 (%) | 123 | 116 | 110 |
| Öffnungsweite (mm) | 0,13 | 0,09 | 0,08 |
| Wasserdurchlässigkeit (m/s) bei 2 kN/m$^2$ ohne Bodenkontakt | $7,7 \cdot 10^{-3}$ | $4,6 \cdot 10^{-3}$ | $4,5 \cdot 10^{-3}$ |
| Kegelfallversuch (Durchstoßprüfung) Lochdurchmesser (mm) | 15 | 9 | 8 |
| Standardbreite (m)/Länge (m) | 4,40 / 100 | 4,40 / 50 | 4,40 / 50 |

## Tabelle 2

### Zweischicht-Verbundvlies

| | | Filterschicht | | Dränschicht |
|---|---|---|---|---|
| | | mechanisch verfestigter Vliesstoff aus PES-Spinn-fasern | | mechanisch und chemisch gebundener Vliesstoff aus PP-Grobfasern |
| Flächengewicht | g/m² | 250 | Gesamt 1000 | 750 |
| Dicke (DIN 53855) Auflast 2 kN/m² | mm | 3,0 | 14 | 11,0 |
| Höchstzugkraft DIN 53857 | kN/m | 7 | | |
| Dehnung bei Höchstzugkraft | % | 45 | | |
| wirksame Öffnungsweite | mm | 0,09 entspricht der Porenweite von Mittelsand ($d_{50} \approx 0{,}4$mm) | | 1,34 entspricht der Porenweite von Mittelkies ($d_{50} \approx 6$mm) |
| Wasserdurch-lässigkeit (k-Wert) senkrecht | kN/m | $1{,}8 \cdot 10^{-2}$ bei 2 kN/m² bis $1{,}8 \cdot 10^{-3}$ bei 200 kN/m² Auflast (k-Werte bestimmen den Zufluß zur Dränschicht; entsprechen etwa den Werten von Grobsand) | | |
| Wasserdurch-lässigkeit in der Ebene (Dränwirkung) | | Bemessungsunterlagen auf Anforderung verfügbar | | |

Die Zwischenschicht aus quellfähigem Ton besteht vorzugsweise aus Bentoniten. Bentonite sind Tone mit merklichem bis hohem Gehalt an Smectit (Montmorillonit), der die Eigenschaften (hohe Quellbarkeit, gutes Wasserbindevermögen, hohe Plastizität) maßgebend bestimmt. Um aus einem in Wasser wenig quellfähigen Erdalkali-Bentonit einen hochquellfähigen Aktivbentonit zu erhalten, werden die Erdalkaliionen der Bentonite durch Alkaliionen, vorzugsweise Natriumionen, ersetzt. Als "hochquellfähiger" Aktivbentonit wird daher Natrium-Bentonit mit seiner stark erhöhten Plastizität, Viskosität, Thixotropie und Wasseraufnahme, gemäß der vorliegenden Erfindung, bevorzugt.

Die Bentonite können in der Zwischenschicht als Pulver und/oder Granulat vorliegen. Beim Einsatz von Granulat können die Granulatteilchen eine Korngröße von größer als 2,5 mm haben. Sie können selbstverständlich aber auch kleiner sein.

Außerdem läßt sich eine Verminderung der Wasserdurchlässigkeit der erfindungsgemäßen Dichtungsmatten dadurch erreichen, daß man bei der Herstellung zunächst auf die Trägerschicht einen mehligen Bentonit aufbringt und gegebenenfalls einrüttelt und dann erst das körnige Bentonitgranulat aufbringt. Anstelle des Einrüttelns des mehligen Bentonits in die Trägerschicht kann man auch so verfahren, daß man die Trägerschicht zunächst mit einer wässrigen Bentonit-Suspension imprägniert oder eine wässrige Bentonitpaste aufwalzt und dann erst, gegebenenfalls nach vorheriger Trocknung, das körnige Bentonitgranulat aufbringt. Gewünschtenfalls kann man die Deckschicht vor ihrer Aufbringung ebenfalls in der vorstehenden Weise wie die Trägerschicht behandeln. Für manche Anwendungszwecke kann man sogar

4

die auf diese Weise vorbehandelte Träger- oder Deckschicht allein als Dichtungsmatte einsetzen.

Die Dicke der Bentonit-Zwischenschicht beträgt je nach Anwendungszweck vorzugsweise 0,5 bis 10,0 mm. Sie kann aber auch kleiner oder größer sein, was sich z.B. auch danach richtet, ob die Träger- und/oder Deckschicht, wie vorstehend angegeben, mit feinstteiligen Bentoniten vorbehandelt wurde oder nicht.

Durch die Vernadelung der drei Schichten im Nadelstuhl erhält man den gewünschten festen mechanischen Zusammenhalt der drei Schichten der erfindungsgemäßen Dichtungsmatte unter gleichzeitiger Ausschaltung des gemäß dem Stande der Technik eingesetzten Klebstoffes. Gleichzeitig ergeben sich dadurch weitere wesentliche Vorteile. Selbst wenn Träger- und/oder Deckschicht nicht, wie vorstehend beschrieben, vorbehandelt wurden, erhält man durch die Vernadelung an den der Bentonit-Zwischenschicht zugewandten Innenoberfläche und den darunter liegenden Zonen der Vliesstoffe eine intensive Vermischung von Fasern und Bentonit. Außerdem erhält man durch die feste Vernadelungsverbindung beim Aufquellen des Bentonits durch Befeuchten einen Quellgegendruck, der in Verbindung mit der vorstehend geschilderten intensiven Vermischung von Fasern und Bentonit eine Wasserundurchlässigkeit der erfindungsgemäßen Dichtungsmatten garantiert. Durch die Vernadelung wird ferner die Flexibilität der Dichtungsmatten gewährleistet, die in ihrer Flexibilität den guten Verformbarkeitseigenschaften der mechanisch verfestigten Vliesstoffe nahekommt.

Die erfindungsgemäßen wasserundurchlässigen Dichtungsmatten finden insbesondere im Wasser- und Deponiebau Anwendung.

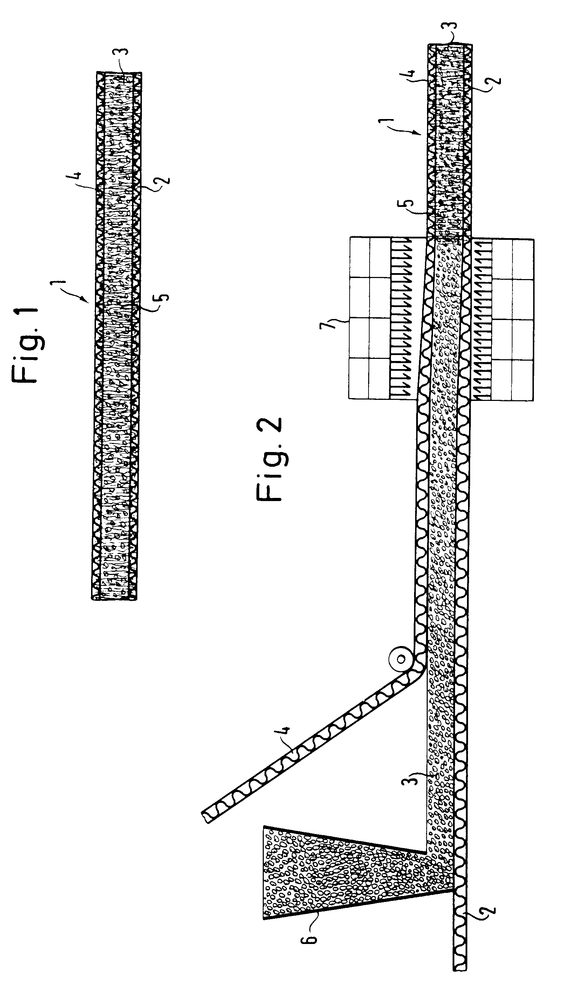

Die vorliegende Erfindung wird weiterhin anhand der Fig. 1 und 2 und der nachfolgenden Beispiele erläutert, ohne sie jedoch darauf zu beschränken.

Fig. 1      zeigt im Querschnitt einen Teil der erfindungsgemäßen Dichtungsmatte 1;

Fig. 2      zeigt in schematischer Darstellung im Längsschnitt die kontinuierliche Herstellung der erfindungsgemäßen wasserundurchlässigen Dichtungsmatte 1. Von einem Vorratssilo 6 wird der Bentonit als Bentonit-Zwischenschicht 3 auf die von einer nicht dargestellten Vorratsrolle abgewickelte Trägerschicht 2 (Vliesstoff) aufgebracht. Im Anschluß daran wird die ebenfalls von einer nicht dargestellten Vorratsrolle abgewickelte Deckschicht 4 (auch Vliesstoff) auf die Bentonit-Zwischenschicht 3 aufgebracht. Das so erhaltene aus drei Schichten bestehende Flächengebilde wird durch einen Nadelstuhl 7 geführt, in dem alle drei Schichten in üblicher Weise vernadelt werden. Je nach Schichtdicke der Bentonit-Zwischenschicht 3 wird das vernadelte Flächengebilde, das die wasserundurchlässige Dichtungsmatte 1 darstellt, auf Rolle gewickelt oder jeweils in der gewünschten Länge abgeschnitten.

Nach der großflächigen Verlegung der so hergestellten Dichtungsmatten am Einsatzort können die Dichtungsmatten an ihren Rändern, mit denen sie aneinanderstoßen, miteinander verschweißt oder zusammengenäht werden, wodurch auch an den Stoßkanten gewährleistet ist, daß sich die Bentonit-Zwischenschicht 3 beim Aufquellen an den Stoßkanten zu einer zusammenhängenden wasserundurchlässigen Zwischenschicht verbindet. Eine wasserdichte Überlappung erreicht man auch dadurch, daß man zwischen den sich überlappenden Bereichen eine Bentonitraupe einbringt und dann diese Bereiche zusammenpreßt.

Beispiel 1

Zur Herstellung einer Dichtungsmatte für Wasserbau verwendet man als Trägerschicht 2 einen Vliesstoff 1004 R und als Deckschicht 4 einen Vliesstoff 201-3 mit den nachfolgend angegebenen Kennwerten:

| Type | 1004 R | 201-3 |
|---|---|---|
| Faserrohstoff | PES/PP | PES |
| Flächengewicht (g/m$^2$) | 814 | 225 |
| Dicke (mm) bei 2 kN/m$^2$ | 6,6 | 2,8 |
| Höchstzugkraft DIN 53587 (Streifenzugversuch) (Länge/Breite) (daN/10 cm) | 149/341 | 95/140 |
| Höchstzugkraftdehnung DIN 53857 (Länge/Breite) (%) | 111/49 | 65/60 |
| Verformung bei Stempeldurchdrückkraft DIN 54307 (%) | -- | -- |
| Öffnungsweite (mm) | 0,08 | 0,09 |
| Wasserdurchlässigkeit (m/s) bei 2 kN/m$^2$ ohne Bodenkontakt | 4,9-10$^{-3}$ | 6,0-10$^{-5}$ |
| Kegelfallversuch (Durchstoßprüfung) Lochdurchmesser (mm) | -- | 16 |
| Standardbreite (m)/Länge (m) | 4,80x100 | 4,75x100 |

Der Vliesstoff 1004 R ist eine seit Jahren eingesetzte und bewährte Wasserbaumatte. Die Produktionsbreite beträgt in der Regel 4,80 m. Er stellt einen Verbundstoff aus zwei Vliesstoffschichten dar, und zwar aus einer Filterschicht aus Polyester (PES; ca. 70 % Anteil am Gesamtgewicht) und einer Grobfaserschicht aus Polypropylenfasern (ca. 30 % Anteil am Gesamtgewicht). Die Fasern sind durch Vernadeln rein mechanisch verfestigt. Dieser als Trägerschicht 2 dienende Zweischicht-Verbundvlies hat eine Schichtdicke von größer als 6,0 mm.

Der Vliesstoff 201-3 ist ein einschichtiger Vliesstoff aus 100 % Polyesterfasern. Wie aus der vorstehenden Tabelle ersichtlich, beträgt das Flächengewicht ca. 225 g/m$^2$ und die Schichtdicke ca. 2,8 mm. Die Produktionsbreite beträgt in der Regel ebenfalls 4,80 m.

Die Bentonit-Zwischenschicht 4 besteht aus einem aktivierten Natrium-Bentonit, das in einer Menge von ca. 2500 g/m$^2$ aufgebracht wird, was einer Schichtdicke von ca. 1 bis 2 mm entspricht.

Bei der Herstellung geht man wie folgt vor:

Eine Rolle Vliesstoff 1004 R wird über einen Wickelblock abgerollt und als Trägerschicht 2 einem Nadelstuhl 7 zugeführt. Während des Abrollvorganges wird eine abgewogene Menge trockenen Bentonits mit einer Korngröße von wenigen Millimetern auf die Trägerschicht 2 aufgebracht. Gleichzeitig wird eine Rolle Vliesstoff 201-3 über einen weiteren Wickelblock als Deckschicht 4 der Bentonit-Zwischenschicht 3 zugeführt. Diese drei Schichten durchlaufen dann den Nadelstuhl 7 und werden dort mechanisch fest miteinander verbunden.

Der Nadelstuhl 7 weist ein oder mehrere Nadelbretter auf. Jedes Nadelbrett ist mit tausenden von Nadeln ausgerüstet. Die Nadelbretter werden sehr schnell auf und ab geführt (bis ca. 1000 Hübe je Minute). Die mit Einkerbungen ausgestatteten Nadeln durchstechen die Vliesstoffschichten 2, 4 und die Bentonit-Zwischenschicht 3, wobei die Einkerbungen dafür sorgen, daß die einzelnen Fasern miteinander verschlungen werden, so daß ein fester Verbund entsteht. Da der Vernadelungsvorgang nicht vibrationsfrei ist, dringt ein Teil des aufgebrachten Bentonits in die Faservliesschichten, insbesondere in die Poren die der Bentonit-Zwischenschicht 3 zugewandten Grobfaserschicht der Trägerschicht 2 ein.

Die nach Verlassen des Nadelstuhls 7 erhaltene Dichtungsmatte wird wieder auf eine Rolle gewickelt und zum Ein satzort transportiert, wo sie nach Verlegung und Befeuchtung die Funktion als wasserundurchlässige Dichtungsmatte erfüllt.

Beispiel 2

Zur Herstellung einer wasserundurchlässigen Dichtungsmatte für den Deponiebau verwendet man sowohl für die Trägerschicht 2 als auch für die Deckschicht 4 die in Tabelle 1 angegebenen Vliesstoffe, die aus Polyethylenfasern hoher Dichte bestehen. Trägerschicht 2 und Deckschicht 4 können dabei gleich oder unterschiedlich sein.

**Patentansprüche**

1.  Wasserundurchlässige Dichtungsmatte (1), bestehend im wesentlichen aus einer Trägerschicht (2), einer Zwischenschicht aus quellfähigem Ton (3) und einer Deckschicht (4), dadurch gekennzeichnet, daß
(a) die Träger- und/oder die Deckschicht (2, 4) aus einem Vliesstoff und die gegebenenfalls nicht aus einem Vliesstoff bestehende Schicht aus einem Gewebe oder Gewirke besteht und
(b) alle drei Schichten (2-4) miteinander vernadelt sind.

2. Dichtungsmatte nach Anspruch 1, dadurch gekennzeichnet, daß die Vliesstoffe mechanisch verfestigte Spinnfaservliese sind.

3. Dichtungsmatte nach Anspruch 1 und 2, dadurch gekennzeichnet, daß die Vliesstoffe aus nichtverrottbaren Kunststoff-Fasern bestehen, vorzugsweise aus Polyolefin-Fasern, insbesondere aus Polyethylen hoher Dichte (HDPE).

4. Dichtungsmatte nach Anspruch 1 bis 3, dadurch gekennzeichnet, daß die Zwischenschicht (3) aus einem Bentonit, vorzugsweise aus einem alkalisch aktivierten Bentonit, insbesondere aus einem aktivierten Natrium-Bentonit, besteht.

5. Dichtungsmatte nach Anspruch 1 bis 4, dadurch gekennzeichnet, daß der eingesetzte Bentonit pulverförmig oder granulatförmig ist.

6. Dichtungsmatte nach Anspruch 1 bis 5, dadurch gekennzeichnet, daß ein Bentonit-Granulat mit einer Korngröße von mindestens 2,5 mm eingesetzt wird.

7. Dichtungsmatte nach Anspruch 1 bis 6, dadurch gekennzeichnet, daß die Trägerschicht 1 bis 10 mm, die Bentonit-Zwischenschicht 0,5 bis 10 mm und die Deckschicht 1 bis 10 mm dick sind.

8. Verfahren zur kontinuierlichen Herstellung von Dichtungsmatten gemäß Anspruch 1 bis 7, dadurch gekennzeichnet, daß man auf die Trägerschicht (2) den trockenen pulverförmigen bis granulatförmigen quellfähigen Ton (3) aufbringt, die Deckschicht (4) darüberlegt und den erhaltenen Drei-Schichtstoff in an sich bekannter Weise durch einen Nadelstuhl (7) zwecks Vernadelung von Trägerschicht (2) und Deckschicht (4) führt.

9. Verfahren nach Anspruch 8, dadurch gekennzeichnet, daß man einen trockenen aktivierten Natrium-Bentonit mit einer durchschnittlichen Korngröße von mindestens 2,5 mm auf die Trägerschicht aufbringt.

10. Verfahren nach Anspruch 8 und 9, dadurch gekennzeichnet, daß man die Trägerschicht (2) und/oder die Deckschicht (4) vor dem Zusammenbringen mit der Zwischenschicht mit einer Bentonit-Suspension imprägniert oder in diese Schichten sehr feinteiligen Bentonit aufbringt und gegebenenfalls einrüttelt.

## Claims

1. A water-impermeable sealing mat (1) comprising a substrate layer (2), an interlayer of swellable clay (3), and a cover layer (4), characterized in that
(a) the substrate layer (2) and/or the cover layer (4) consist(s) of a non-woven textile material, and the layer optionally not consisting of non-woven textile material consists of a woven or knitted fabric, and,
(b) all three layers (2) are bonded together by needling.

2. A sealing mat according to claim 1, in which the non-woven textile materials are mechnically consolidated non-woven staple fiber mats.

3. A sealing mat according to claim 1 or 2, in which the non-woven textile materials consist of non-rotting synthetic resin fibers, preferably of polyolefin fibers, especially of high density polyethylene (HDPE).

4. A sealing mat according to any of claims 1 to 3, in which the interlayer (3) consists of a bentonite, preferably of an alkalimetal activated bentonite, especially sodium-activated bentonite.

5. A sealing mat according to any of claims 1 to 4, in which the bentonite employed is powdered or granular.

6. A sealing mat according to any of claims 1 to 5, in which a granulated bentonite having a particle size of at least 2.5 mm is employed.

7. A sealing mat according to any of claims 1 to 6, in which the substrate layer has a thickness of 1 to 10 mm, the bentonite interlayer has a thickness of 0,5 to 10 mm, and the cover layer has a thickness of 1 to 10 mm.

8. A method for continuously producing sealing mats according any of claims 1 to 7, comprising applying on the substrate layer (2) the dry, powdered to granular, swellable clay (3), placing the cover layer (4) thereon, and passing the resulting triple layer material in a manner known per se through a needle loom (7) in order to needle the substrate layer (2) and cover layer (4) together.

9. A method according to claim 8, wherein a dry, activated sodium bentonite having an average particle size of at least 2,5 mm is applied onto the substrate layer.

10. A method according to claim 8 or 9, wherein the substrate layer (2) and/or cover layer (4) is impregnated with a bentonite suspension, or very finely divided bentonite is applied onto and said bentonite is optionally vibrated into said layers, prior to joining said layers to said interlayer.

**Revendications**

1. Nappe d'étanchéité (1) imperméable à l'eau comprenant essentiellement une couche support (2), une couche intermédiaire en argile (3) pouvant gonfler et une couche de couverture (4), caractérisée en ce que :
   a) la couche support et/ou la couche de couverture (2, 4) sont en non-tissé et la couche, le cas échéant, qui n'est pas en non-tissé est en tissu ou tricot et,
   b) on coud ensemble les trois couches (2, 4).

2. Nappe d'étanchéité selon la revendication 1, caractérisée en ce que les non-tissés sont des non-tissés de fibres filées mécaniquement renforcés.

3. Nappe d'étanchéité selon la revendication 1 et 2, caractérisé en ce que les non-tissés sont des fibres de matière plastique ne pourrissant pas, de préférence en fibres de polyoléfines, notamment en polyéthylène haute densité (PE HD).

4. Nappe d'étanchéité selon la revendication 1 à 3, caractérisée en ce que la couche intermédiaire (3) est en bentonite, de préférence en bentonite alcaline activée, notamment en bentonite sodium activée.

5. Nappe d'étanchéité selon la revendication 1 à 4, caractérisée en ce que la bentonite utilisée est en poudre ou granulés.

6. Nappe d'étanchéité selon la revendication 1 à 5, caractérisée en ce qu'on utilise un granulé de bentonite d'une granulométrie d'au moins 2,5 mm.

7. Nappe d'étanchéité selon les revendications 1 à 6, caractérisée en ce que la couche support à une épaisseur de 1 à 10 mm, la couche intermédiaire de bentonite de 0,5 à 10 mm et la couche de couverture de 1 à 10 mm

8. Procédé de production en continu de nappes d'étanchéité selon la revendication 1 à 7, caractérisé en ce qu'on dépose sur la couche support (2) l'argile (3) sèche pouvant gonfler, en poudre ou ne granulé, puis par dessus la couche de couverture (4) et on fait passer de la manière connue en soi le feuilleté trois couches obtenu dans une machine à battant brodeur (7) pour coudre la couche support (2) et la couche de couverture (4).

9. Procédé selon la revendication 8, caractérisé en ce qu'on dépose une bentonite sodium activée sèche d'une granulométrie moyenne d'au moins 2,5 mm sur la couche support.

**10.** Procédé selon les revendications 8 et 9, caractérisé en ce qu'on imprègne d'une suspension de bentonite la couche support (2) et/ou la couche de couverture (4) avant l'assemblage avec la couche intermédiaire ou on dépose dans ces couches de la bentonite très fine et le cas échéant on vibre pour la faire pénétrer.

Fig. 2

Fig. 1